# EUROPÄISCHE PATENTSCHRIFT

(11) **EP 2 722 515 B1**
(45) Veröffentlichungstag und Bekanntmachung des Hinweises auf die Patenterteilung: **28.01.2015**
(21) Anmeldenummer: 13002560.4
(22) Anmeldetag: 16.05.2013
(51) Int. Cl.: F02M 25/07, F01N 13/10, F02B 37/00

(54) **Abgaskrümmer für eine Brennkraftmaschine, insbesondere in Kraftfahrzeugen**
Exhaust manifold for an internal combustion engine, particularly in motor vehicles
Collecteur de gaz d'échappement pour un moteur à combustion interne, en particulier dans des véhicules automobiles

(30) Priorität: 18.10.2012 DE 102012020443
(43) Veröffentlichungstag der Anmeldung: 23.04.2014
(73) Patentinhaber: MAN Truck & Bus AG, 80995 München (DE)
(72) Erfinder: Greiner, Manfred, 91241 Kirchensittenbach (DE)

(56) Entgegenhaltungen:
- WO-A1-2011/136088
- FR-A1- 2 863 306
- US-A1- 2005 205 070

## Beschreibung

Die vorliegende Erfindung betrifft einen Abgaskrümmer für eine Brennkraftmaschine, insbesondere in Kraftfahrzeugen, mit Abgasturboaufladung und einer Abgasrückführeinrichtung gemäß dem Oberbegriff des Patentanspruchs 1.

Aus der DE 10 2006 016432 A1 ist eine Brennkraftmaschine mit Abgasturboaufladung und einer Abgasrückführeinrichtung bekannt, bei der in einem zweiflutigen Abgaskrümmer von der einen Flut eine Auslassöffnung für die Abgasrückführung abzweigt, während beide Fluten zu einem gemeinsamen Auslass für den Abgasturbolader zusammengeführt sind. Vor der Auslassöffnung für den Abgasturbolader ist eine Überströmöffnung vorgesehen, die die Druckverhältnisse in der Flut mit der Abgasrückführöffnung positiv beeinflussen soll.

WO2011/136088 A1 lehrt einen Abgaskrümmer der neben seinen Abgaszuführleitungen ferner einen Abzweig zu einem Abgasturbolader sowie einen Abzweig zu einer Abgasrückführleitung aufweist. Im Bereich der beiden Abzweige weist der rohrförmige Abgaskrümmer einen gebogenen Abschnitt (Eindellung) auf, welche die Abgasströmung und insbesondere die Abgasrückführrate beeinflussen.

Aufgabe der Erfindung ist es, mit relativ einfachen Mitteln die Strömungsverhältnisse im Abgaskrümmer derart zu steuern, dass eine verbesserte Beaufschlagung der Turbine des Abgasturboladers und zugleich eine gezielte Abgasrückführung auch im instationären Betrieb der Brennkraftmaschine erzielbar ist.

Die Lösung dieser Aufgabe wird mit den Merkmalen des Patentanspruchs 1 erreicht. Vorteilhafte und besonders zweckmäßige Weiterbildungen und Ausgestaltungen der Erfindung sind in den Unteransprüchen angeführt.

Erfindungsgemäß wird vorgeschlagen, dass im Sammelrohr des Abgaskrümmers nahe den Auslassöffnungen für die Abgasrückführung und für den Abgasturbolader zumindest ein Strömungsleitelement angeordnet ist, das den Abgasstrom gezielt auf die Auslassöffnungen aufteilt. Es hat sich überraschend gezeigt, dass mit dieser Maßnahme eine wirkungsvolle Beaufschlagung des an den Abgaskrümmer ange

schlossenen Abgasturboladers erzielbar ist, die eine einflutige Ausgestaltung des Sammelrohres und eine variable Anordnung des Abgasturboladers ermöglicht und die zudem hohe Abgasrückführraten ohne Verwendung zum Beispiel von Flatterventilen zur Ausnutzung von Druckschwankungen in bestimmten Betriebszuständen der Brennkraftmaschine erforderlich macht.

Besonders bevorzugt können die Auslassöffnungen für die Abgasrückführung und den Abgasturbolader zwischen zwei Einströmöffnungen des Sammelrohres positioniert sein, wobei das Strömungsleitelement, zwischen den benachbarten Einströmöffnungen angeordnet, die entgegengerichteten Abgasströme auf die Auslassöffnungen umlenkt. Das Abgas strömt somit gezielt und auf die jeweiligen Massenströme abgestimmt in die Auslassöffnungen, wobei Turbulenzen und Strömungswiderstände weitgehendst vermieden sind.

Dabei können die Auslassöffnungen für die Abgasrückführung und zum Abgasturbolader im wesentlichen diametral gegenüberliegend vom Sammelrohr abgehen, wobei das Strömungsleitelement mit Leitwänden den Abgasstrom strömungsgünstig zu den Auslassöffnungen umlenkt.

Das Strömungsleitelement kann ferner fertigungstechnisch günstig im Querschnitt etwa Y-förmig mit einer in Strömungsrichtung des Abgases im Sammelrohr ausgerichteten Leitwand und zwei zu den Auslassöffnungen abknickenden Leitwänden ausgeführt und an diametral gegenüberliegende Wandabschnitte des Sammelrohrs zwischen den benachbarten Einströmöffnungen angegossen sein. Besonders bevorzugt können dabei die Leitwände des Strömungsleitelements mit strömungsumlenkenden Krümmungsabschnitten ineinander übergehen.

In einer besonders vorteilhaften Ausgestaltung des Abgaskrümmers können bei einer etwa horizontalen Einströmung des Abgases durch die Einströmöffnungen die Auslassöffnung für die Abgasrückführung quer dazu nach oben und die Auslassöffnung zum Abgasturbolader quer dazu nach unten ausgerichtet sein und somit eine problemlose Anordnung des Abgasturboladers an der Brennkraftmaschine und eine besonders zweckmäßige Anbindung der Abgasrückführleitung gegebenenfalls mit integriertem Abgaskühler ermöglichen.

Das bevorzugt einflutige Sammelrohr des Abgaskrümmers kann für den Anschluss von zumindest zwei Zylindern der Brennkraftmaschine, insbesondere für sechs in Reihe angeordneten Zylinder, ausgelegt sein, wobei die Auslassöffnungen für die Abgasrückführung und zum Abgasturbolader zwischen den in Strömungsrichtung des Abgases letzten beiden Einströmöffnungen angeordnet sind. Dies hat einen nicht unwesentlichen Einfluss auf die Strömungsverhältnisse im Abgaskrümmer mit einer wirkungsvollen Staudruckaufladung des Abgasturboladers und einer gezielten Aufteilung des Abgasmassenstroms für die Abgasrückführungsrate.

In einer vorteilhaften Weiterbildung der Erfindung können den Einströmöffnungen im Sammelrohr gegenüberliegende Wandabschnitte wellenförmig ausgebildet sein, derart, dass die jeweiligen Wellenberge in Strömungsrichtung des Abgases betrachtet vor den jeweiligen Einströmöffnungen positioniert sind. Damit kann eine noch verbesserte Gleichrichtung des Abgasmassenstroms im Sammelrohr erzielt werden, die insbesondere das Ansprechverhalten des Abgasturboladers verbessert und vermehrt einen strömungsbedingten Abgasgegendruck bei hohen Motordrehzahlen vermindert. Dazu können ferner die die Einströmöffnungen umschließenden, an das Sammelrohr angegossenen Anschlussstutzen bzw. Rohrführungen in Strömungsrichtung des Abgases im Sammelrohr geneigt oder gekrümmt ausgebildet sein.

Ein Ausführungsbeispiel der Erfindung ist im Folgenden anhand der beigefügten, schematischen Zeichnung näher erläutert. Es zeigen:
- Fig. 1: eine Ansicht in Richtung des Pfeils X der Fig. 2 auf einen Abgaskrümmer für eine Reihen-Brennkraftmaschine für Kraftfahrzeuge, mit einem an den Abgaskrümmer angeschlossenen Abgasturbolader und einem angeschlossenen Rohrstutzen für eine Abgasrückführleitung;
- Fig. 2: einen Schnitt gemäß Linie II - II der Fig. 1 durch den Abgaskrümmer mit in dessen Sammelrohr integriertem Strömungsleitelement;
- Fig. 3: einen weiteren Schnitt entlang Linie III - III der Fig. 1 durch den Abgaskrümmer mit den gewellt ausgeführten Wandabschnitten stromauf des Strömungsleitelements; und
- Fig. 4: den Abgaskrümmer in der Ansicht gemäß Fig. 2 in teilweiser, vergrößerter Darstellung.

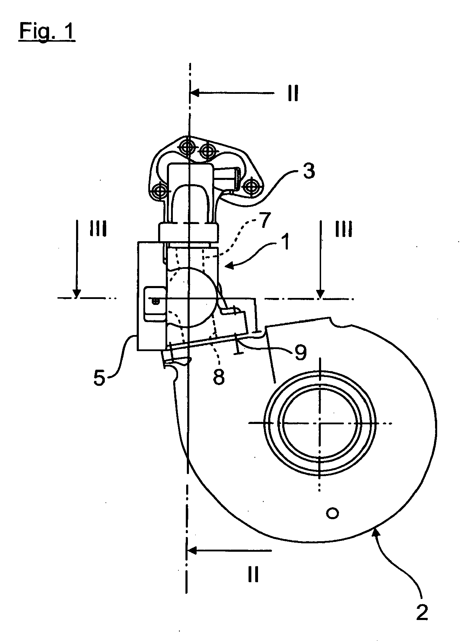

In den Fig. 1 bis 4 ist ein Abgaskrümmer 1 gezeigt, der an eine Brennkraftmaschine, insbesondere für Kraftfahrzeuge, mit in zumindest einer Reihe angeordneten Zylindern (Reihen-Brennkraftmaschine oder Zylinderbank einer V-Brennkraftmaschine) anbaubar ist und an den die Turbine eines nicht weiter beschriebenen Abgasturboladers 2 und ein Rohrstutzen 3 einer abgehenden Abgasrückführleitung (nicht dargestellt) für eine Abgasrückführeinrichtung üblicher Bauart angeschlossen ist.

Die Abgasturbine kann zum Beispiel eine variable Turbinengeometrie (VGT) aufweisen. Der Abgaskrümmer 1 kann einteilig gegossen oder wie dargestellt zweiteilig mit einem Abschnitt 1 a und 1 b ausgebildet sein, wobei die Abschnitte über eine Dichthülse 1 c gasdicht miteinander verbunden sind.

Der Abgaskrümmer 1 setzt sich funktionell aus einem etwa linear ausgerichteten, einflutigen Sammelrohr 4 und daran angeformte, etwa horizontal abgehende Anschlussstutzen 5 zusammen, die Einströmöffnungen 6 bildend an den Zylinderkopf (nicht dargestellt) der Brennkraftmaschine bzw. deren Abgaskanäle angeschlossen sind.

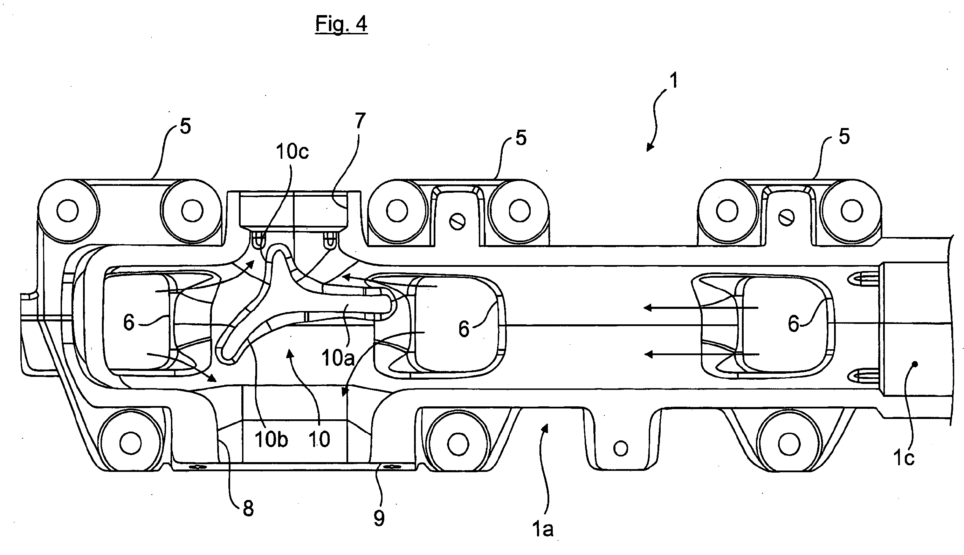

Ferner ist eine nach oben abgehende Auslassöffnung 7 (vergleiche auch Fig. 4) vorgesehen, an die der Rohrstutzen 3 für die Abgasrückführleitung angeschlossen ist.

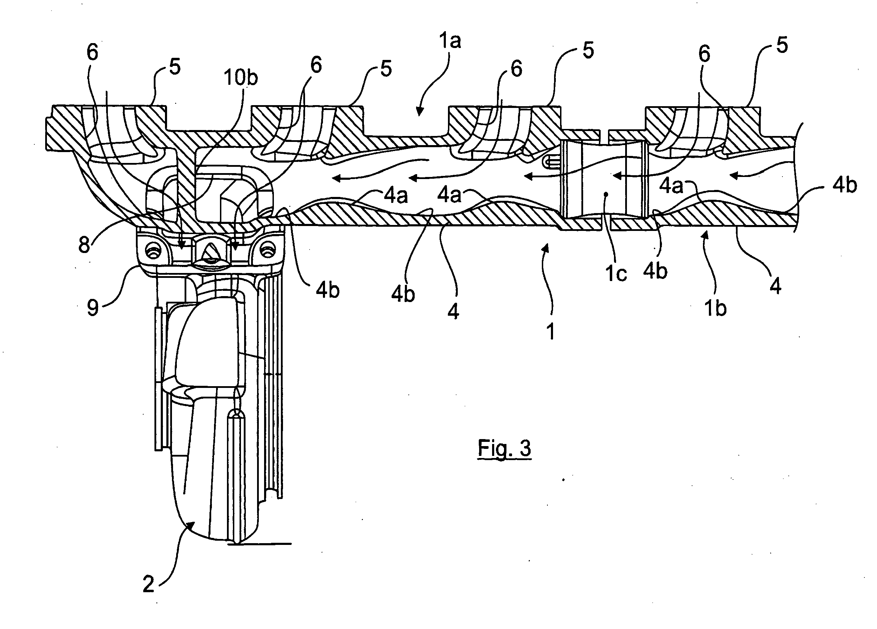

An eine nach unten führende Auslassöffnung 8 an einem angeformten Anschlussflansch 9 (Fig. 3) ist die Turbine des Abgasturboladers 2 angeschlossen.

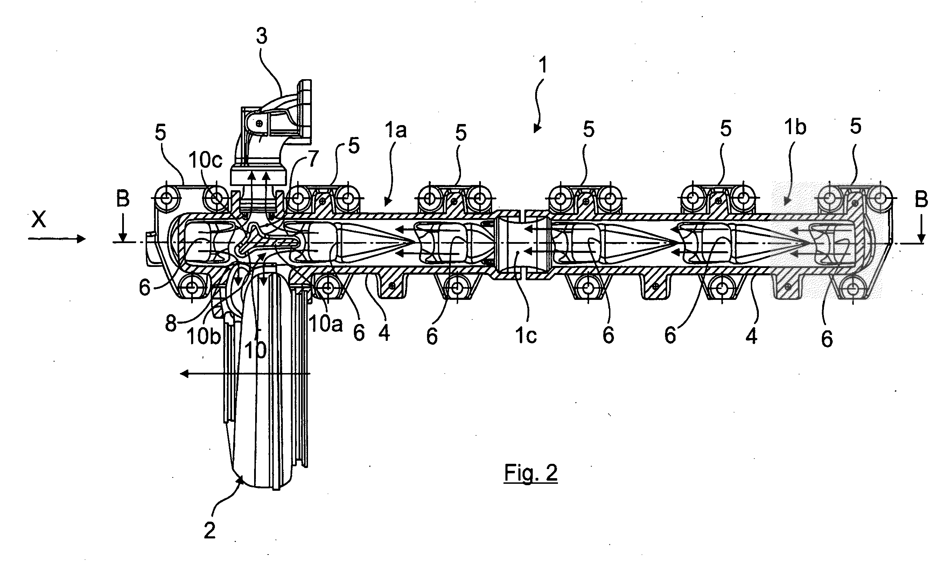

Der Abgaskrümmer 1 ist hier beispielhaft für eine Sechszylinder-Reihen-Brennkraftmaschine ausgelegt mit demzufolge sechs Anschlussstutzen 5 bzw. sechs Einströmöffnungen 6. Die quer dazu abgehenden Auslassöffnungen 7, 8 nach oben und unten sind zwischen den beiden Einströmöffnungen 6 der in Abgasströmungsrichtung (eingezeichnete Pfeile in den Fig. 2 bis 4) letzten Zylindern fünf und sechs positioniert.

In diesem Bereich ist in den Abgaskrümmer 1 bzw. in das Sammelrohr 4 ein Strömungsleitelement 10 (vergleiche insbesondere Fig. 2 und 4) eingegossen, das den Abgasstrom im Sammelrohr 4 auf die beiden Auslassöffnungen 7, 8 bzw. zur gezielten Abgasrückführung und Beaufschlagung der Abgasturbine des Abgasturboladers 2 aufteilt.

Das Strömungsleitelement 10 ist im Querschnitt entlang der Linie II - II (Fig. 1) betrachtet etwa Y-förmig ausgebildet mit einer in Richtung des Sammelrohres 4 ausgerichteten Leitwand 10a und zwei zu den Auslassöffnungen 7, 8 abknickenden Leitwänden 10b und 10c. Die Leitwände gehen, wie insbesondere aus Fig. 4 ersichtlich ist, über entsprechend ausgebildete Krümmungsabschnitte (ohne Bezugszeichen) verrundet ineinander über.

Das Strömungsleitelement 10 bzw. dessen Leitwände 10a, 10b, 10c sind an das Sammelrohr 4 angegossen (vergleiche Fig. 3, Leitwand 10b) und strömungstechnisch so ausgelegt, dass sie in gezielter Verteilung das aus den Einströmöffnungen 6 zuströmende Abgas auf die Auslassöffnungen 7, 8 umlenken.

Die dargestellte Y-förmige Konfiguration des Leitelements 10 teilt sowohl den auf der Zeichnung nach links strömenden Abgasmassenstrom aus den Zylindern eins bis fünf als auch den entgegengesetzt aus dem Zylinder 6 zuströmenden Abgasmassenstrom unter Vermeidung von Turbulenzen oder Strömungswiderständen auf die beiden Auslassöffnungen 7 und 8 auf (siehe eingezeichnete Pfeile in den Fig. 2 und 4).

Dabei ist insbesondere aus Fig. 4 ersichtlich, dass das Leitelement 10 bzw. dessen Leitwände 10a, 10b, 10c größere Strömungsquerschnitte und eine dynamisch bevorzugte Strömungsführung zur Auslassöffnung 8 freigeben, während die Strömungsquerschnitte zur Auslassöffnung 7 für die Abgasrückführung deutlich geringer sind.

Die Abstimmung dieser Querschnitte auf die Abgasmassenströme der Brennkraftmaschine ermöglicht gezielt eine wirkungsvolle Beaufschlagung des Abgasturboladers 2 einerseits und eine hohe Abgasrückführrate an der Abgasrückführeinrichtung 3 andererseits.

Zu einer verbesserten Strömungsdynamik im Sammelrohr 4 (vergleiche Fig. 3) sind die den Einströmöffnungen 6 des Sammelrohrs 4 gegenüberliegenden Wandabschnitte wellenförmig mit Bergen 4a und Tälern 4b über einen definierten Umfangsbereich (von zum Beispiel 45 Grad) eingeformt, wobei die Wellenberge 4a in Strömungsrichtung des Abgases jeweils vor den Einströmöffnungen 6 und die Täler etwa dahinter liegen.

Des Weiteren sind die die Einströmöffnungen 6 in den Anschlussstutzen 5 bildenden Kanalabschnitte in Abgasströmungsrichtung geneigt bzw. gekrümmt ausgebildet, um in Verbindung mit den gewellten Bereichen 4a, 4b dem einströmenden Abgas eine verbesserte Strömungsumlenkung zum linearen Sammelrohr 4 aufzuprägen.

Die Erfindung ist nicht auf das dargestellte Ausführungsbeispiel beschränkt. Insbesondere kann der Abgaskrümmer 1 auch auf andere Zylinderzahlen der Brennkraftmaschine ausgelegt sein mit entsprechend angeordneten Einströmöffnungen 6.

Das Strömungsleitelement 10 oder gegebenenfalls mehrere Strömungsleitelemente können zum Beispiel bei vier Einströmöffnungen 6 am Abgaskrümmer symmetrisch zwischen jeweils zwei Einströmöffnungen 6 vorgesehen sein, wobei das Leitelement 10 entsprechend zu modifizieren wäre.

Der Abgaskrümmer 1 ist bevorzugt als Gussteil hergestellt; gegebenenfalls könnte aber auch eine gebaute Konstruktion mit einem entsprechend eingesetzten Strömungsleitelement 10 verwendet sein.

### BEZUGSZEICHENLISTE

- 1: Abgaskrümmer
- 1a: Krümmerabschnitt
- 1b: Krümmerabschnitt
- 2: Abgasturbolader
- 3: Rohrstutzen
- 4: Sammelrohr
- 4a: Wellenberge
- 4b: Täler
- 5: Anschlussstutzen
- 6: Einströmöffnungen
- 7: Auslassöffnung AGR
- 8: Auslassöffnung ATL
- 9: Anschlussflansch
- 10: Strömungsleitelement
- 10a bis 10c: Leitwände

## Patentansprüche

1. Abgaskrümmer (1) für eine Brennkraftmaschine, insbesondere in Kraftfahrzeugen, mit Abgasturboaufladung und einer Abgasrückführeinrichtung zum Rückführen von Abgas aus dem Abgaskrümmer (1) zum Maschineneinlass, wobei der Abgaskrümmer (1) ein Sammelrohr (4) mit mehreren, mit den Brennräumen der Brennkraftmaschine, vorzugsweise über Anschlussstutzen, verbundene Einströmöffnungen (6) und vom Sammelrohr (4) über Anschlussverbindungen abgehende Auslassöffnungen (7, 8) für die Abgasrückführung und zum Abgasturbolader aufweist, wobei im Sammelrohr (4) nahe den Auslassöffnungen (7, 8) zumindest ein Strömungsleitelement (10) angeordnet ist, das den Abgasstrom gezielt auf die Auslassöffnungen (7, 8) aufteilt **dadurch gekennzeichnet, dass** das Strömungsleitelement (10) im Querschnitt etwa Y-förmig mit einer in Strömungsrichtung des Abgases im Sammelrohr (4) ausgerichteten Leitwand (10a) und zwei zu den Auslassöffnungen (7, 8) ragenden Leitwänden (10b, 10c) ausgeführt ist.

2. Abgaskrümmer nach Anspruch 1, **dadurch gekennzeichnet, dass** die Auslassöffnungen (7, 8) für die Abgasrückführung und den Abgasturbolader zwischen zwei Einströmöffnungen (6) des Sammelrohres (4) positioniert sind und dass das zwischen diesen benachbarten Einströmöffnungen (6) angeordnete Strömungsleitelement (10) den entgegengerichteten Abgasstrom auf die Auslassöffnungen (7, 8) umlenkt.

3. Abgaskrümmer nach Anspruch 1 oder 2, **dadurch gekennzeichnet, dass** die Auslassöffnungen (7, 8) für die Abgasrückführung und zum Abgasturbolader im wesentlichen diametral gegenüberliegend vom Sammelrohr (4) abgehen und dass das Strömungsleitelement (10) mit Leitwänden (10a, 10b, 10c) den Abgasstrom zu den Auslassöffnungen (7, 8) umlenkt.

4. Abgaskrümmer nach einem der vorhergehenden Ansprüche, **dadurch gekennzeichnet, dass** das Strömungsleitelement (10) an diametral gegenüberliegende Wandabschnitte des Sammelrohrs (4) zwischen den benachbarten Einströmöffnungen (6) angeformt und/oder angegossen ist.

5. Abgaskrümmer nach einem der vorhergehenden Ansprüche, **dadurch gekennzeichnet, dass** die Leitwände (10a, 10b, 10c) des Strömungsleitelements (10) mit strömungsumlenkenden Krümmungsabschnitten ineinander übergehen.

6. Abgaskrümmer nach einem der vorhergehenden Ansprüche, **dadurch gekennzeichnet, dass** bei einer etwa horizontalen Einströmung des Abgases durch die Einströmöffnungen (6) die Auslassöffnung (7) für die Abgasrückführung quer dazu nach oben und die Auslassöffnung (8) zum Abgasturbolader (2) quer dazu nach unten ausgerichtet ist.

7. Abgaskrümmer nach einem der vorhergehenden Ansprüche, **dadurch gekennzeichnet, dass** das Sammelrohr (4) für den Anschluss von zumindest zwei Zylindern der Brennkraftmaschine, insbesondere für sechs Zylinder, ausgelegt ist und dass die Auslassöffnungen (7, 8) für die Abgasrückführung und zum Abgasturbolader zwischen den in Strömungsrichtung des Abgases letzten beiden Einströmöffnungen (6) angeordnet sind.

8. Abgaskrümmer nach einem der vorhergehenden Ansprüche, **dadurch gekennzeichnet, dass** den Einströmöffnungen (6) im Sammelrohr (4) gegenüberliegende Wandabschnitte wellenförmig ausgebildet sind, derart, dass die jeweiligen Wellenberge (4a) in Strömungsrichtung des Abgases betrachtet vor den jeweiligen Einströmöffnungen (6) positioniert sind.

9. Abgaskrümmer nach Anspruch 8, **dadurch gekennzeichnet, dass** die die Einströmöffnungen (6) umschließenden, an das Sammelrohr (4) angegossenen Anschlussstutzen (5) oder Rohrführungen in Strömungsrichtung des Abgases im Sammelrohr (4) geneigt oder gekrümmt ausgebildet sind.

10. Fahrzeug, insbesondere Nutzfahrzeug, mit einem Abgaskrümmer nach einem der vorhergehenden Ansprüche.

## Claims

1. Exhaust manifold (1) for an internal combustion engine, in particular in motor vehicles, with exhaust turbocharging and an exhaust gas recirculation device for recirculating exhaust gas from the exhaust manifold (1) to the engine inlet, wherein the exhaust manifold (1) comprises a header pipe (4) with several inflow openings (6) connected with the combustion chambers of the internal combustion engine preferably via connecting pieces, and outlet openings (7, 8) branching from the header pipe (4) via connecting branches for the exhaust gas recirculation and to the exhaust turbocharger, wherein at least one flow guide element (10) is arranged in the header pipe (4) close to the outlet openings (7, 8) which divides the exhaust gas flow onto the outlet openings (7, 8) in a targeted manner, **characterized in that** the flow guide element (10) is designed approximately Y-shaped in cross section with one guide wall (10a) oriented in the flow direction of the exhaust gas in the header pipe (4) and two guide walls (10b, 10c) jutting towards the outlet openings (7, 8).

2. Exhaust manifold according to Claim 1, **characterized in that** the outlet openings (7, 8) for the exhaust gas recirculation and the exhaust turbocharger are positioned between two inflow openings (6) of the header pipe (4) and that the flow guide element (10) arranged between these adjacent inflow openings (6) deflects the opposing exhaust gas flow onto the outlet openings (7, 8).

3. Exhaust manifold according to Claim 1 or 2, **characterized in that** the outlet openings (7, 8) for the exhaust gas recirculation and to the exhaust turbocharger branch from the header pipe (4) substantially diametrically opposed, and that the flow guide element (10) with guide walls (10a, 10b, 10c) deflects the exhaust gas flow onto the outlet openings (7, 8).

4. Exhaust manifold according to any of the preceding claims, **characterized in that** the flow guide element (10) is moulded and/or cast on diametrically opposed wall segments of the header pipe (4) between the adjacent inflow openings (6).

5. Exhaust manifold according to any of the preceding claims, **characterized in that** the guide walls (10a, 10b, 10c) of the flow guide element (10) merge into each other with flow-deflecting curved segments.

6. Exhaust manifold according to any of the preceding claims, **characterized in that** on an approximately horizontal inflow of exhaust gas through the inflow openings (6), the outlet opening (7) for the exhaust gas recirculation is oriented transversely thereto upwards and the outlet opening (8) to the exhaust turbocharger (2) transversely thereto downwards.

7. Exhaust manifold according to any of the preceding claims, **characterized in that** the header pipe (4) is adapted for the connection of at least two cylinders of the internal combustion engine, in particular for six cylinders, and that the outlet openings (7, 8) for the exhaust gas recirculation and to the exhaust turbocharger are arranged between the last two inflow openings (6) in the flow direction of the exhaust gas.

8. Exhaust manifold according to any of the preceding claims, **characterized in that** wall segments opposite the inflow openings (6) in the header pipe (4) are formed undulating such that viewed in the flow direction of the exhaust gas, the respective undulation peaks (4a) are positioned in front of the respective inflow openings (6).

9. Exhaust manifold according to Claim 8, **characterized in that** the connecting pieces (5) or pipe guides surrounding the inflow openings (6) and cast onto the header pipe (4) are formed inclined or curved in the flow direction of the exhaust gas in the header pipe (4).

10. Vehicle, in particular a truck, with an exhaust manifold according to any of the preceding claims.

## Revendications

1. Collecteur de gaz d'échappement (1) pour un moteur à combustion interne, en particulier dans des véhicules automobiles, avec turbocompression des gaz d'échappement et système de recyclage des gaz d'échappement pour le recyclage des gaz d'échappement à partir du collecteur de gaz d'échappement (1) jusqu'à l'admission du moteur, dans lequel le collecteur de gaz d'échappement (1) présente un tube de collecte (4) avec plusieurs orifices d'entrée (6) raccordés aux chambres de combustion du moteur à combustion interne, de préférence par des tuyaux de raccordement, et plusieurs orifices de sortie (7, 8) partant du tube de collecte (4) par des connexions de raccordement pour le recyclage des gaz d'échappement et vers le turbocompresseur à gaz d'échappement, dans lequel au moins un élément de guidage d'écoulement (10) est disposé dans le tube de collecte (4) à proximité des orifices de sortie (7, 8), et répartit le flux de gaz d'échappement de façon ciblée sur les orifices de sortie (7, 8), **caractérisé en ce que** l'élément de guidage d'écoulement (10) présente une section transversale sensiblement en forme de Y avec une paroi de guidage (10a) orientée dans la direction d'écoulement des gaz d'échappement dans le tube de collecte (4) et deux parois de guidage (10b, 10c) s'étendant vers les orifices de sortie (7, 8).

2. Collecteur de gaz d'échappement selon la revendication 1, **caractérisé en ce que** les orifices de sortie (7, 8) pour le recyclage de gaz d'échappement et pour le turbocompresseur à gaz d'échappement sont positionnés entre deux orifices d'entrée (6) du tube de collecte (4) et **en ce que** l'élément de guidage d'écoulement (10) disposé entre ces orifices d'entrée voisins (6) dévie le flux de gaz d'échappement orienté en sens contraire vers les orifices de sortie (7, 8).

3. Collecteur de gaz d'échappement selon la revendication 1 ou 2, **caractérisé en ce que** les orifices de sortie (7, 8) pour le recyclage de gaz d'échappement et vers le turbocompresseur à gaz d'échappement partent en position essentiellement diamétralement opposée du tube de collecte (4) et **en ce que** l'élément de guidage d'écoulement (10) dévie avec des parois de guidage (10a, 10b, 10c) le flux de gaz d'échappement vers les orifices de sortie (7, 8).

4. Collecteur de gaz d'échappement selon l'une quelconque des revendications précédentes, **caractérisé en ce que** l'élément de guidage d'écoulement (10) est moulé et/ou coulé sur des sections de paroi diamétralement opposées du tube de collecte (4) entre les orifices d'entrée voisins (6).

5. Collecteur de gaz d'échappement selon l'une quelconque des revendications précédentes, **caractérisé en ce que** les parois de guidage (10a, 10b, 10c) de l'élément de guidage d'écoulement (10) se prolongent l'une dans l'autre par des parties incurvées qui dévient l'écoulement.

6. Collecteur de gaz d'échappement selon l'une quelconque des revendications précédentes, **caractérisé en ce que**, dans le cas d'une entrée sensiblement horizontale des gaz d'échappement par les orifices d'entrée (6), l'orifice de sortie (7) pour le recyclage de gaz d'échappement est orienté vers le haut transversalement à celui-ci et l'orifice de sortie (8) vers le turbocompresseur à gaz d'échappement (2) est orienté vers le bas transversalement à celui-ci.

7. Collecteur de gaz d'échappement selon l'une quelconque des revendications précédentes, **caractérisé en ce que** le tube de collecte (4) est conçu pour le raccordement d'au moins deux cylindres du moteur à combustion interne, en particulier pour six cylindres, et **en ce que** les orifices de sortie (7, 8) pour le recyclage de gaz d'échappement et vers le turbocompresseur sont disposés entre les deux derniers orifices d'entrée (6) dans la direction d'écoulement des gaz d'échappement.

8. Collecteur de gaz d'échappement selon l'une quelconque des revendications précédentes, **caractérisé en ce que** des sections de paroi situées en face des orifices d'entrée (6) dans le tube de collecte (4) sont réalisées sous forme ondulée, de telle manière que les crêtes d'onde respectives (4a), considérées dans la direction d'écoulement des gaz d'échappement, soient positionnées avant les orifices d'entrée respectifs (6).

9. Collecteur de gaz d'échappement selon la revendication 8, **caractérisé en ce que** les tuyaux de raccordement (5) ou les conduites entourant les orifices d'entrée (6) et moulées sur le tube de collecte (4) sont réalisées sous forme inclinée ou courbées dans la direction d'écoulement des gaz d'échappement dans le tube de collecte (4).

10. Véhicule, en particulier véhicule utilitaire, avec un collecteur de gaz d'échappement selon l'une quelconque des revendications précédentes.
